# EUROPÄISCHE PATENTSCHRIFT

(11) **EP 1 506 050 B1**
(45) Veröffentlichungstag und Bekanntmachung des Hinweises auf die Patenterteilung: **29.11.2006**
(21) Anmeldenummer: 02716792.3
(22) Anmeldetag: 20.02.2002
(51) Int. Cl.: B01D 46/10, B01D 53/04, F24C 15/20

(54) **VERFAHREN UND FILTERANLAGE ZUM ABSCHEIDEN VON KONDENSAT UND DERGLEICHEN**
METHOD AND FILTER INSTALLATION FOR SEPARATING CONDENSATE AND SIMILAR
PROCEDE ET INSTALLATION DE FILTRAGE POUR SEPARER UN PRODUIT DE CONDENSATION ET DES MATIERES ANALOGUES

(43) Veröffentlichungstag der Anmeldung: 16.02.2005
(73) Patentinhaber: Langner, Manfred H., 60318 Frankfurt am Main (DE)
(72) Erfinder: Langner, Manfred H., 60318 Frankfurt am Main (DE)
(74) Vertreter: Katscher, Helmut
(86) Internationale Anmeldenummer: PCT/EP2002/001775
(87) Internationale Veröffentlichungsnummer: WO 2003/070355

(56) Entgegenhaltungen:
- DE-A- 2 530 107
- GB-A- 2 267 840
- US-A- 4 619 948

## Beschreibung

Die Erfindung betrifft ein Verfahren zum Abscheiden von Kondensat und dergleichen aus einem Luftstrom, wobei der Luftstrom durch ein poröses Filtermaterial geleitet wird.

Bei Abluft- und Zuluftfilteranlagen enthält der durchgeleitete Luftstrom oftmals neben gasförmigen oder festen Substanzen einen nicht unerheblichen Anteil an kondensatbildenden Bestandteilen. Ein Herausfiltern dieser Substanzen und/oder der kondensatbildenden Bestandteile aus dem Luftstrom kann notwendig werden, um eine mögliche Geruchsbelästigung oder den unkontrollierten Niederschlag von Kondensat zu vermeiden. Beispielsweise in Reinräumen sind kontrollierte Luftbedingungen und damit eine geregelte Zufuhr aufbereiteter Frischluft zwingend notwendig. Dagegen kann die in geschlossenen Räumen entstandene Abluft Schadstoffe enthalten und/oder eine Brandgefahr im Abluftkanal herbeiführen.

Vor allem bei der Herstellung und Verarbeitung von Lebensmitteln werden Abluftanlagen eingesetzt, um die oftmals sehr wasserdampf- und fetthaltige Abluft abzuführen. Dabei fällt insbesondere beim Einsatz in Großküchen und ähnlichen Einrichtungen eine erhebliche Menge an flüssigem Kondensat an, die kontinuierlich aus der Abluft herausgefiltert werden muss. Eine dafür verwendete Filteranlage soll nicht nur wirtschaftlich und effektiv betrieben werden können, sondern muss auch den gerade in diesen Bereichen strengen Anforderungen an die Hygiene und Sauberkeit genügen.

Die in dem Luftstrom in Form von Dämpfen oder Aerosolen enthaltenen kondensatbildenden Bestandteile schlagen sich vorzugsweise an im Vergleich zum Luftstrom kälteren Oberflächen nieder. An den dann feuchten Oberflächen bleiben auch feste Partikel und Staub haften. Die meisten Filteranlagen beruhen deshalb auf einer kontrollierten Kondensatbildung an speziell dafür vorgesehenen und entsprechend gestalteten Oberflächen. So ist es beispielsweise bekannt, am Lufteintritt einer Abluftanlage einen mechanischen Filter, beispielsweise einen Prallabscheider anzuordnen. Die eintretende Abluft wird dabei mehrfach so stark umgelenkt, dass darin enthaltene Kondensattröpfchen auf die Oberfläche des mechanischen Filters treffen und dort abgeschieden werden.

Je größer die ständig anfallende und abzuscheidende Kondensatmenge ist, um so schwieriger und aufwendiger wird es, das Kondensat und die Verunreinigungen aus der Filteranlage abzuführen und gleichbleibend gute Filtereigenschaften zu gewährleisten. Herkömmliche Filtereinrichtungen sind deshalb üblicherweise aus wasserabweisendem Material hergestellt, so dass kondensierte Flüssigkeit selbständig ablaufen kann. Die Filterwirkung beruht allein auf einer für diesen Zweck vorteilhaften Oberflächengestaltung des Filters, so dass ein Großteil des mitgeführten Kondensats aus dem durchgeleiteten Luftstrom abgeschieden wird. Um eine Sättigung des Filters beispielsweise durch Fett oder andere sich im Filter festsetzende Rückstände zu vermeiden, muss der Filter in regelmäßigen Abständen gereinigt werden.

Ein einfacher mechanischer Filter besitzt für viele Anwendungen nicht die notwendigen Eigenschaften, um insbesondere kleine Tröpfchen und Aerosole aus dem durchgeleiteten Luftstrom ausreichend abzuscheiden. Der Luftstrom muss dann durch zusätzliche Filtereinrichtungen wie beispielsweise Faserfilter oder Oxidationsfilter wie beispielsweise Aktivkohlefilter geleitet werden, die das darin abgeschiedene Kondensat jedoch speichern und deshalb nach einiger Zeit ausgewechselt werden müssen.

Die Druckschrift GB-A-2 267 840 betrifft einen Wärme- und Feuchtigkeitstauscher zur Patientenbeatmung. Ein wärme- und feuchtigkeitstauschendes Element aus hydrophilem Schaumstoff wird dort nicht zum Filtern des hindurch geführten Luftstroms verwendet. Der Luftstrom wird mit einem getrennt angeordneten Filterelement gefiltert.

Die Druckschrift US-A-619 948 betrifft einen eine Atemschutzmaske. Ein hydrophiler Schaumstoff dient lediglich als Trägermaterial mit einer großen Oberfläche für ein damit verbundenes Filtermaterial, insbesondere für Aktivkohle. Die Filterwirkung der Atemschutzmaske wird allein auf das mit dem Schaumstoff verbundene Filtermaterial zurückgeführt.

Die Druckschrift DE 25 30 107 A beschreibt einen Filter für Dunstabzugshauben mit einer Filtermatte aus einem synthetischen Schaumstoff, der nachträglich mit einem oberflächlich anhaftenden Emulgator versehen wird. Es kann nur eine geringe Menge des Emulgators auf der Schaumstoffmatte aufgebracht werden, so dass eine geringe Filterqualität und in regelmäßigen Abständen eine Sättigung und eine damit einhergehende Verminderung der Filterfunktion zu befürchten sind.

Aufgabe der Erfindung ist es demzufolge, ein Verfahren der eingangs genannten Gattung so auszugestalten, dass mit einfachen Mitteln eine effektive Abscheidung von Kondensat und dergleichen aus einem Luftstrom erreicht wird. Auch bei einem hohen Aufkommen von abgeschiedenem Kondensat soll eine Reinigung der Filteranlage nur selten notwendig werden und ein kontinuierlicher und kostengünstiger Betrieb möglich sein.

Diese Aufgabe wird erfindungsgemäß dadurch gelöst, dass der Luftstrom durch einen mindestens teilweise offenporigen, hydrophilen Schaumstoff geleitet wird.

Durch die teilweise offenen, teils geschlossenen Poren des als Filtermaterial verwendeten Schaumstoffs werden selbst kleinste Tröpfchen im durchgeleiteten Luftstrom so häufig und stark umgelenkt, dass sie mit dem hydrophilen Material in Berührung kommen. Aufgrund der wasseranziehenden Eigenschaften des hydrophilen Schaumstoffs werden die Kondenströpfchen schnell absorbiert und damit dem Luftstrom entzogen. Durch die Porenstruktur ist ein schnelles Abfließen der Kondensatflüssigkeit gegeben. Selbst bei einem mit Kondensatflüssigkeit nahezu gesättigten Schaumstoff ist ein Mitreißen von bereits auskondensierten Flüssigkeitstropfen durch den durchgeleiteten Luftstrom nahezu ausgeschlossen. Durch die Oberflächenbeschaffenheit wird auch eine gute Reinigungswirkung für Aerosole und Staubteilchen erreicht.

Einer vorteilhaften Ausgestaltung des Erfindungsgedankens zufolge ist vorgesehen, dass der Luftstrom zuerst durch einen mechanischen Filter und daran anschließend durch den mindestens teilweise offenporigen, hydrophilen Schaumstoff geleitet wird. Der mechanische Filter kann dabei sehr einfach ausgeführt und leicht zu reinigen sein, da er hauptsächlich große Kondensattropfen aus dem durchgeleiteten Luftstrom abscheiden soll. Der danach angeordnete mindestens teilweise offenporige, hydrophile Schaumstoff muss nur ein wesentlich geringeres Kondensatvolumen in Form kleiner Tröpfchen und Aerosole aus dem Luftstrom abscheiden. Da sich wegen des geringeren Kondensatvolumens weniger darin befindliche Rückstände im Schaumstoff festsetzen können, muss dieser nur wesentlich seltener gereinigt oder ausgetauscht werden.

Die Erfindung betrifft auch eine Filteranlage für die Durchführung des Verfahrens. Die Filteranlage ist dadurch gekennzeichnet, dass das verwendete Filtermaterial ein mindestens teilweise offenporiger, hydrophiler Schaumstoff ist.

Der hydrophile Schaumstoff kann in großen Mengen kostengünstig hergestellt werden. Es ist auch möglich, bereits betriebene Filteranlagen nachträglich für die Verwendung mit diesem Filtermaterial umzurüsten.

Einer vorteilhaften Ausgestaltung des Erfindungsgedankens zufolge ist vorgesehen, dass der teilweise offenporige, hydrophile Schaumstoff eine im wesentlichen retikuläre Struktur aufweist. Durch spezielle Verfahren, beispielsweise durch Wärmeveredelung, kann bei der Herstellung des Filtermaterials eine netzartige Struktur des hydrophilen Schaumstoffs erreicht werden. Durch die dadurch vorgegebene Anordnung der Poren sowie Materialoberflächen wird ein schnelles Sammeln und Abfließen der Kondensatflüssigkeit gefördert. Gleichzeitig wird durch die vorgegebene Struktur eine über große Bereiche des hydrophilen Schaumstoffs gleichbleibende Filtereigenschaft sichergestellt. Der netzartige Aufbau des hydrophilen Schaumstoffs verbessert zudem seine Stabilität, so dass er den üblicherweise auftretenden mechanischen Beanspruchungen leicht standhält.

Vorzugsweise ist vorgesehen, dass das Filtermaterial regenerierbar ist. Weist die zu filternde Abluft bzw. Zuluft einen hohen Gehalt an gelösten Feststoffen oder Fetten auf, so können sich solche Bestandteile aus der kondensierten Flüssigkeit heraus leicht in den nur schwer zugänglichen Poren des Schaumstoffs ablagern. Mit zunehmender Nutzungsdauer verstopfen immer mehr Poren, so dass die Filterwirkung des Schaumstoffs gemindert wird. Das Filtermaterial kann dann der Filteranlage entnommen und beispielsweise unter Zugabe von Reinigungsmitteln oder in einem Ultraschallbad ausgewaschen werden.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 eine schematische Darstellung des Funktionsprinzips einer Filteranlage,
Fig. 2 eine schematische Darstellung einer Abluftfilteranlage,
Fig. 3 eine schematische Darstellung einer Zuluftfilteranlage und
Fig. 4 einen Schnitt durch eine stark vereinfacht dargestellte Dunstabzugshaube, in welcher eine einfache Filteranlage mit einem mindestens teilweise offenporigen hydrophilen Schaumstoff als porösem Filtermaterial eingebaut ist.

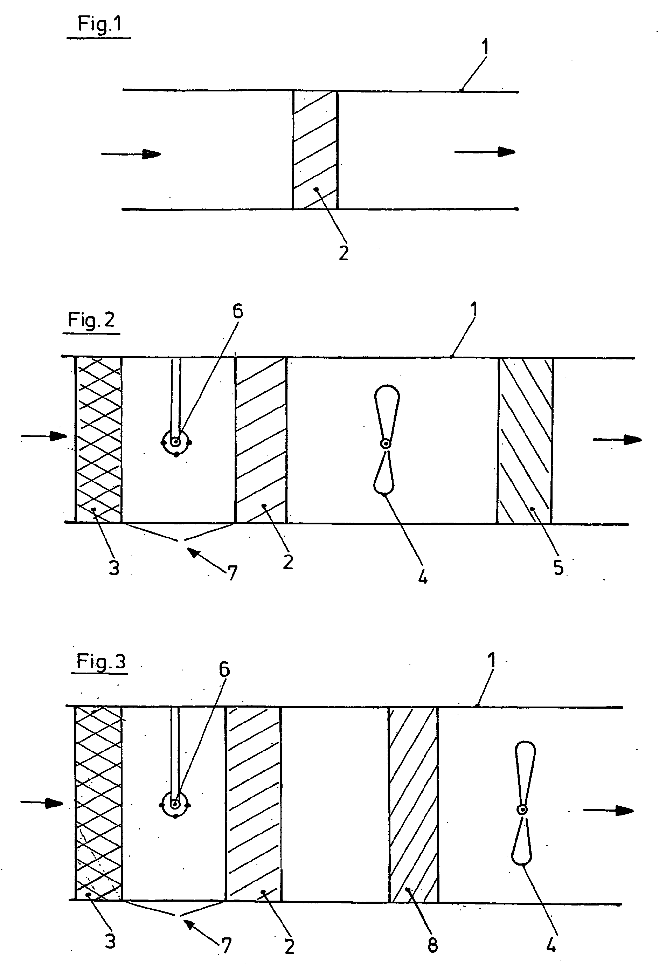

Dem in Fig. 1 dargestellten Funktionsprinzip einer Filteranlage zufolge wird der Luftstrom durch einen Kanal 1 geführt. Dabei muss der Luftstrom einen mit einem mindestens teilweise offenporigen, hydrophilen Schaumstoff 2 ausgefüllten Bereich passieren. Die Strömungsgeschwindigkeit des Luftstroms kann beispielsweise durch ein in der Fig. nicht dargestelltes Gebläse gesteuert werden. Die Strömungsgeschwindigkeit des Luftstroms wird zweckmäßigerweise so gewählt, dass einerseits die Luft möglichst schnell weggeführt wird, andererseits aber der Luftstrom keine Tröpfchen des sich im Filtermaterial schon abgeschiedenen Kondensats mitreißen kann.

Durch die Verwendung von mindestens teilweise offenporigem, hydrophilem Schaumstoff 2 als poröses Filtermaterial wird die Filterwirkung wesentlich verbessert. Auch feinste Aerosole werden nahezu vollständig aus dem Luftstrom abgeschieden, so dass eine nachfolgende UV-Oxidation bzw. HS-Oxidation möglich ist.

Die in Fig. 2 dargestellte Abluftfilteranlage zeigt einen Abluftkanal 1', der an der Seite des Lufteintritts einen mechanischen Filter 3 aufweist. Ein großer Anteil der anfallenden Kondensatmenge wird bereits durch den mechanischen Filter 3 aus der Abluft abgeschieden. Nach dem mechanischen Filter 3 ist eine Schicht von mindestens teilweise offenporigem, hydrophilen Schaumstoff 2 im Abluftkanal 1' angeordnet. Auch kleine Tröpfchen und Aerosole werden in dem hydrophilen Schaumstoff 2 effektiv aus der durchgeleiteten Abluft ausgeschieden. Die Strömungsgeschwindigkeit der Abluft durch den Abluftkanal 1' und damit durch den mechanischen Filter 3 sowie den mindestens teilweise offenporigen, hydrophilen Schaumstoff 2 wird durch einen Ventilator 4 gesteuert, der danach im Abluftkanal 1' angebracht ist. Auf der Austrittsseite der Abluftfilteranlage befindet sich ein Aktivkohlefilter 5, mit dem noch in der Abluft mitgeführte Moleküle herausgefiltert werden.

Sowohl der mechanische Filter 3 sowie der mindestens teilweise offenporige, hydrophile Schaumstoff 2 können regelmäßig gereinigt werden, um sich festsetzende Rückstände des Kondensats auszuwaschen. Zwischen dem mechanischen Filter 3 und dem hydrophilen Schaumstoff 2 ist eine Vorrichtung zum Auswaschen 6 beider Filtermaterialien angebracht. Eventuell mit Reinigungsmitteln versehene Flüssigkeit kann während des Betriebes der Abluftfilteranlage durch die Vorrichtung zum Auswaschen 6 im Abluftkanal 1' verteilt werden. Die Reinigungsflüssigkeit wäscht beim Ablaufen aus dem mechanischen Filter 3 und dem teilweise offenporigen, hydrophilen Schaumstoff dort anhaftende Rückstände aus und läuft wie die abgeschiedene Kondensatflüssigkeit durch eine Austrittsöffnung 7 des Abluftkanals 1' ab.

Die in Fig. 3 gezeigte Zuluftfilteranlage ist der in Fig. 2 dargestellten Abluftfilteranlage sehr ähnlich. Statt eines Aktivkohlefilters befindet sich eine Vorrichtung zur Temperaturregelung 8 im Zuluftkanal 1", mit der die zugeführte Luft erwärmt oder gekühlt werden kann.

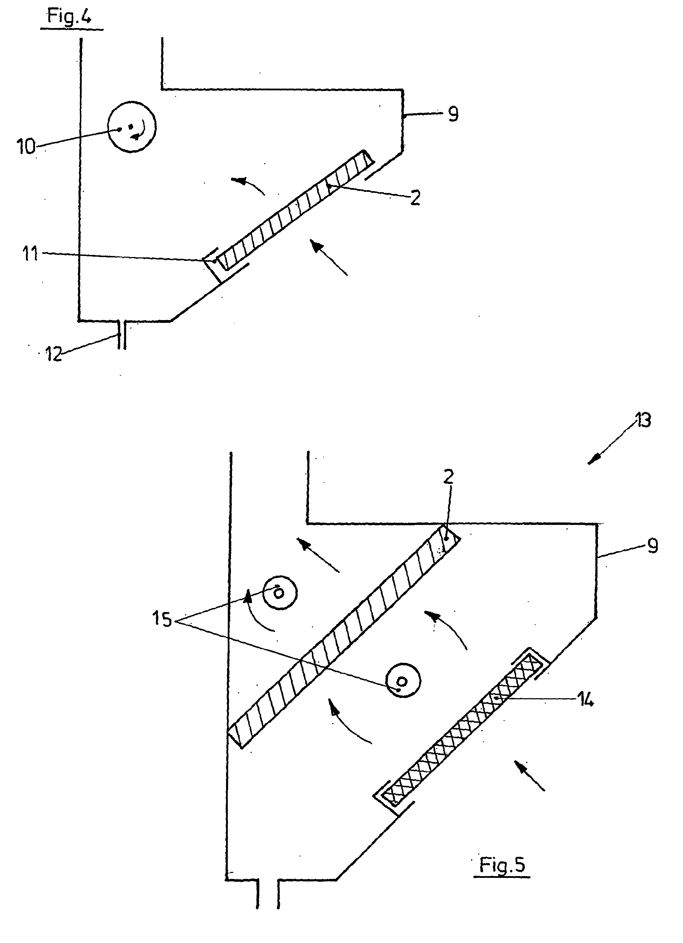

Auch denkbar ist die Verwendung des mindestens teilweise offenporigen hydrophilen Schaumstoffs 2 als Bestandteil einer Dunstabzugshaube. Die in Fig. 4 dargestellte schematische Anordnung zeigt ein Dunstabzugsgehäuse 9. Das Dunstabzugsgehäuse 9 ist vorzugsweise aus Edelstahl hergestellt, um eine einfache und hygienische Reinigung zu ermöglichen. Die Abluft wird durch eine dünne Scheibe aus mindestens teilweise offenporigem, hydrophilem Schaumstoff 2 in das Innere des Dunstabzugsgehäuses 9 gesaugt. Die Strömungsgeschwindigkeit der eingesaugten Abluft kann mittels eines Sauggebläses 10 kontrolliert werden. Die sich im hydrophilen Schaumstoff 2 niederschlagende Kondensatflüssigkeit fließt schnell im Filtermaterial ab und wird in einer gleichzeitig als Haltevorrichtung für den hydrophilen Schaumstoff 2 dienenden Sammelrinne 11 aufgefangen. Von dort aus kann die Kondensatflüssigkeit kontrolliert durch einen Abfluss 12 abgeführt werden. Zu Reinigungszwecken kann der hydrophile Schaumstoff 2 leicht entnommen werden. Aufgrund guter Filtereigenschaften eignen sich vor allem Esterschaumwerkstoffe für die Verwendung als Filtermaterial. Durch die Verwendung des hydrophilen Schaumstoffs 2 mit der Dunstabzugshaube werden nachfolgende Einbauten und Rohre oder Kanäle wirksam vor Verschmutzung geschützt.

In Fig. 5 ist eine andere Ausführung einer Dunstabzugshaube 13 dargestellt. Die Abluft wird zunächst durch einen Vorfilter 14 gesaugt, der üblicherweise als Prallabscheider oder als mechanischer Filter ausgeführt ist und auch als Flammenschutz wirkt. Eine Beschädigung durch Flammen oder zu große Hitze der hinter dem Vorfilter im Inneren des Dunstabzugsgehäuses 9 angeordneten dünnen Scheibe aus mindestens teilweise offenporigem, hydrophilen Schaumstoff 2 ist demzufolge nahezu ausgeschlossen. Zu beiden Seiten der dünnen Scheibe aus mindestens teilweise offenporigem, hydrophilen Schaumstoff 2 ist jeweils eine Waschvorrichtung 15 angeordnet. In bestimmbaren Intervallen oder kontinuierlich kann durch diese Waschvorrichtungen 15 eine Reinigungsflüssigkeit in Richtung der dünnen Scheibe aus mindestens teilweise offenporigem, hydrophilen Schaumstoff 2 versprüht werden. Bei geschickter Anordnung und Ausgestaltung der Waschvorrichtungen 15 ist eine nahezu vollständige Reinigung des gesamten Innenraums der Dunstabzugshaube 13 automatisiert und auch während des Betriebes möglich.

## Patentansprüche

1. Verfahren zum Abscheiden von Kondensat und dergleichen aus einem Luftstrom in Dunstabzugshauben, wobei der Luftstrom durch einen mindestens teilweise offenporigen, eine retikuläre Struktur aufweisenden hydrophilen Schaumstoff (2) geleitet wird, der eine Abscheidung des im Luftstrom mitgeführten Kondensats bewirkt.

2. Verfahren nach Anspruch 1, **dadurch gekennzeichnet, dass** der Luftstrom zuerst durch einen mechanischen Filter (3) und anschließend durch den mindestens teilweise offenporigen, hydrophilen Schaumstoff (2) geleitet wird.

3. Verfahren nach Anspruch 1, **dadurch gekennzeichnet, dass** der Luftstrom nach dem mindestens teilweise offenporigen, hydrophilen Schaumstoff (2) durch einen Oxidationsfilter, insbesondere einen Aktivkohlefilter (5) geleitet wird.

4. Filteranlage in einer Dunstabzugshaube zur Durchführung des Verfahrens nach Anspruch 1, **dadurch gekennzeichnet, dass** das verwendete Filtermaterial ein mindestens teilweise offenporiger, eine retikuläre Struktur aufweisender hydrophiler Schaumstoff (2) ist.

5. Filteranlage nach Anspruch 4, **dadurch gekennzeichnet, dass** das Filtermaterial regenerierbar ist.

6. Filteranlage nach Anspruch 4 oder 5, **dadurch gekennzeichnet, dass** vor dem mindestens teilweise offenporigen, hydrophilen Schaumstoff (2) zusätzlich ein mechanischer Filter (3) angeordnet ist.

7. Filteranlage nach Anspruch 4, 5 oder 6, **dadurch gekennzeichnet, dass** nach dem mindestens teilweise offenporigen, hydrophilen Schaumstoff (2) ein Oxidationsfilter, insbesondere ein Aktivkohlefilter (5) angeordnet ist.

## Claims

1. Method for separating off condensate and the like from an air stream in vapour exhaust hoods, the air stream being passed through an at least in part open-pore hydrophilic foam (2) having a reticular structure, which hydrophilic foam separates off the condensate entrained in the air stream.

2. Method according to Claim 1, **characterized in that** the air stream is first passed through a mechanical filter (3) and subsequently through the at least in part open-pore, hydrophilic foam (2).

3. Method according to Claim 1, **characterized in that** the air stream, downstream of the at least in part open-pore, hydrophilic foam (2), is passed through an oxidation filter, in particular an activated carbon filter (5).

4. Filter unit in a vapour exhaust hood for carrying out the method according to Claim 1, **characterized in that** the filter material used is an at least in part open-pore hydrophilic foam (2) having a reticular structure.

5. Filter unit according to Claim 4, **characterized in that** the filter material is regenerable.

6. Filter unit according to Claim 4 or 5, **characterized in that**, upstream of the at least in part open-pore, hydrophilic foam (2), in addition a mechanical filter (3) is arranged.

7. Filter unit according to Claim 4, 5 or 6, **characterized in that**, downstream of the at least in part open-pore, hydrophilic foam (2), an oxidation filter, in particular an activated carbon filter (5), is arranged.

## Revendications

1. Procédé en vue de la séparation/du dépôt de condensat et similaires hors d'un courant d'air dans des hottes d'aspiration, le courant d'air étant conduit à travers une mousse hydrophile (2), présentant une structure réticulaire, au moins partiellement constituée de pores ouverts, qui provoque un dépôt du condensat entraîné par le courant d'air.

2. Procédé selon la revendication 1, **caractérisé en ce que** le courant d'air est conduit tout d'abord à travers un filtre mécanique (3) et ensuite à travers la mousse hydrophile (2), au moins partiellement constituée de pores ouverts.

3. Procédé selon la revendication 1, **caractérisé en ce que** le courant d'air est conduit, après la mousse hydrophile (2), au moins partiellement constituée de pores ouverts, à travers un filtre d'oxydation, en particulier un filtre à charbon actif (5).

4. Installation à filtres dans une hotte d'aspiration en vue de l'exécution du procédé selon la revendication 1, **caractérisée en ce que** le matériau de filtre utilisé est une mousse hydrophile (2), présentant une structure réticulaire, au moins partiellement constituée de pores ouverts.

5. Installation à filtres selon la revendication 4, **caractérisée en ce que** le matériau de filtre peut être régénéré.

6. Installation à filtres selon la revendication 4 ou 5, **caractérisée en ce que** l'on dispose, avant la mousse hydrophile (2), au moins partiellement constituée de pores ouverts, en sus, un filtre mécanique (3).

7. Installation à filtre selon la revendication 4, 5 ou 6, **caractérisée en ce que** l'on dispose, après la mousse hydrophile (2), au moins partiellement constituée de pores ouverts, un filtre d'oxydation, en particulier, un filtre à charbon actif (5).
